Europäisches Patentamt

European Patent Office

Office européen des brevets

(19)

(11) **EP 1 300 374 A1**

(12) **EUROPEAN PATENT APPLICATION**
published in accordance with Art. 158(3) EPC

(43) Date of publication:
**09.04.2003 Bulletin 2003/15**

(21) Application number: **01947987.2**

(22) Date of filing: **12.07.2001**

(51) Int Cl.⁷: $C03C\ 17/34$, $B01J\ 35/02$

(86) International application number:
**PCT/JP01/06044**

(87) International publication number:
**WO 02/004376 (17.01.2002 Gazette 2002/03)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.07.2000 JP 2000211390**

(71) Applicant: **Nippon Sheet Glass Co., Ltd.
Osaka-shi, Osaka 541-8559 (JP)**

(72) Inventors:
• **ARAI, Daisuke,
c/o NIPPON SHEET GLASS CO., LTD
Osaka-shi, Osaka 541-8559 (JP)**

• **ANZAKI, Toshiaki,
c/o NIPPON SHEET GLASS CO., LTD
Osaka-shi, Osaka 541-8559 (JP)**
• **KIJIMA, Yoshifumi,
c/o NIPPON SHEET GLASS CO., LTD
Osaka-shi, Osaka 541-8559 (JP)**

(74) Representative: **Matthews, Derek Peter
Frank B. Dehn & Co.,
179 Queen Victoria Street
London EV4V 4EL (GB)**

(54) **PHOTOCATALYTIC MEMBER**

(57)    A photocatalytic member including a titanium-based oxide film disposed on one of the major surfaces of a transparent substrate, the titanium-based oxide film having a photocatalytic function and a physical thickness of 50 to 500 nm; and a primer film interposed between the transparent substrate and the titanium-based oxide film, the primer film being composed of two layers and having a total physical thickness of 40 to 200 nm, the layer of the primer film adjoining the transparent substrate having at least a function of blocking the gas and impurities which are discharged or eluted from the transparent substrate, and the layer of the primer film adjoining the titanium-based oxide having a larger refractive index than that of the layer adjoining the transparent substrate; in which the primer film reduces the dependence of the color on the thickness of the titanium-based oxide film, and the color of reflected visible light and the color of transmitted visible light of one of the major surfaces of the transparent substrate, when observed at least in one direction, have chromaticness indices a* and b* in the L*a*b* color system in the range indicated as within ±5.

FIG. 1

EP 1 300 374 A1

**Description**

Technical Field

The present invention relates to a photocatalytic member having high photocatalytic activity and mainly comprising a titanium oxide-based oxide.

Background Art

In recent years, articles having a photocatalytic film mainly comprising a titanium-based oxide formed on the surface of a substrate have been receiving attention and already commercialized in a wide variety of fields such as an architectural window glass requiring stain resistance, anti-bacterial properties, a deodorizing function and the like; a display panel for electronic display equipment; a frame for portable equipment, sanitary facilities, medical facilities and the like; implements in a biotechnology field such as DNA analysis and the like. As a method for obtaining the articles having high photocatalytic activity, it is already known that the formation of a thick titanium-based oxide film on the surface of a substrate (for example, a glass substrate) may be used. The previous study by the inventors has provided findings that for the effective use of the photocatalytic film, the titanium-based oxide film needs to have a physical thickness of 50 nm or more.

However, when forming a titanium-based oxide film having a physical thickness of 40 nm or more, especially a thickness of approximately 100 to 300 nm for a practical use, the color of reflected light and the color of transmitted light exhibit chromatic colors by the interference of light, and the "intensity" of color becomes prominent. The obtained color may be positively utilized in some cases, but this is regarded as a problem when achromatic color is required. For example, when used for an architectural window glass, the achromatic color is required in many cases.

In addition, only a small nonuniformity of the thickness of the titanium-based oxide film often causes the color of reflected light to vary, resulting in a problem of the irregular color by the interference to extremely impair its marketability. Therefore, if desired color other than the achromatic color is to be obtained, high controllability and uniformity of film thickness are required.

Furthermore, as a method for maintaining and improving the photocatalytic activity, it is known to interpose a primer film between a titanium-based oxide film and a substrate to impart the function for blocking gas to be discharged and impurities to be eluted from the substrate by the primer film and the function for improving the film structure of the titanium-based oxide film. However, prior examples are nowhere to be found in which the primer film is positively used for improving the color of reflected light and the color of transmitted light without impairing the effect of the primer film.

For example, in National Publication of International Patent Application No. 11-512336 and National Publication of International Patent Application No. 11-512337, there are disclosed technologies to form a photocatalytic layer such as $TiO_2$ by interposing a thin film such as $SiO_2$ or SiOC which exerts the alkaline passivation effect on the surface of a transparent substrate such as a glass plate.

However, the technologies disclosed in these publications cannot change the color of transmitted light to achromatic colors (referred to as "neutral" herein below), and the irregular color by the interference tends to occur.

In addition, according to Japanese Patent Publication No. 3-72586, there is disclosed the technology for disposing two primer layers between a semiconductor film and a glass plate for neutralization when disposing the semiconductor film on the glass plate. However, the primer layer disclosed in Japanese Patent Publication No. 3-72586 has a larger refractive index of the primer layer in the side adjoining the glass plate than that of the primer layer in the side adjoining the semiconductor film. When using such a structure, it is difficult to suppress the color change accompanied with thickness variations when employing a film having a high refractive index such as titanium oxide for the semiconductor film, and irregular color by the interference may occur.

Disclosure of the Invention

The present invention has been created in view of these circumstances, and it is an object of the present invention to provide a photocatalytic member maintaining high photocatalytic activity and having a stain resistant function based on hydrophilic nature, and by setting the material and structure of a primer film, capable of changing the color of reflected light and the color of transmitted light to achromatic colors and reducing the dependence of the color on the thickness of the titanium-based oxide film.

The photocatalytic member according to the present invention comprises a titanium-based oxide film disposed on one of the major surfaces of a transparent substrate, the titanium-based oxide film having a photocatalytic function and a physical thickness of 50 to 500 nm; and a primer film interposed between the above described transparent substrate and the above described titanium-based oxide film, the primer film being composed of two layers of a first primer layer having a physical thickness of 20 to 100 nm and a second primer layer having a physical thickness of 20 to 100 nm, the layer of the above described primer film adjoining the above described transparent substrate having at least a function of blocking the gas and impurities which are discharged or eluted from the transparent substrate, and the layer of the above described primer film adjoining the titanium-based oxide having a larger refractive index than that of the layer adjoining the above described transparent substrate; in which the primer film reduces the dependence of the color on the thickness of the titanium-based oxide film, and the color of reflected visible light and the color of transmitted visible light of one of the major surfaces of the above-described transparent substrate, when observed at least in one direction, have chromaticness indices a* and b* in the L*a*b* color system in the range indicated as within ±5.

In the present invention, a layer of the above described primer film adjoining the above described transparent substrate preferably comprises a silicon nitride, silicon oxide or silicon oxynitride having a refractive index at a wavelength of 550 nm of 1.4 to 2.2.

In the present invention, the layer of the above described primer film adjoining the above described titanium-based oxide film preferably comprises a niobium-based oxide, tin-based oxide or zinc-based oxide.

Various colors of articles having a transparent substrate such as a window glass can be quantitatively expressed on the chromaticity coordinates by chromaticness indices a* and b* in the L*a*b* color system provided by the International Commission on Illumination (Commission Internationale de l'Elairage: CIE), and its calculation method is provided in JIS Z 8729-1980. It is known that when the chromaticness indices a* and b* are in the range indicated as within ±5, the color of reflected light and the color of transmitted light exhibit neutral. Therefore, for obtaining a photocatalytic member exhibiting neutral, the chromaticness indices a* and b* are preferably in the range indicated as within ±5.

In the present invention, a silicon oxide film having oxygen defects is preferably disposed on a top surface.

Further in the present invention, the above described primer film, the above described titanium-based oxide film and the silicon oxide film having oxygen defects preferably comprise films formed by a sputtering method.

Brief Description of the Drawings

Figure 1 is a schematic sectional view showing one embodiment of a photocatalytic member according to the present invention;

Figure 2 is a graphical representation showing the simulation calculation results of the behavior of the color of reflected light at the film surface and the color of transmitted light (a* and b*) when a titanium oxide film has a thickness of 100 to 295 nm in the structure of Example 1;

Figure 3 is a graphical representation showing the simulation calculation results of the behavior of the color of reflected light at the film surface and the color of transmitted light (a* and b*) when a titanium oxide film has a thickness of 100 to 295 nm in the structure of Example 2;

Figure 4 is a graphical representation showing the simulation calculation results of the behavior of the color of reflected light at the film surface and the color of transmitted light (a* and b*) when a titanium oxide film has a thickness of 100 to 295 nm in the structure of Comparative Example 1; and

Figure 5 is a graphical representation showing the simulation calculation results of the behavior of the color of reflected light at the film surface and the color of transmitted light (a* and b*) when a titanium oxide film has a thickness of 100 to 295 nm in the structure of Comparative Example 2.

Best Mode for Carrying Out the Invention

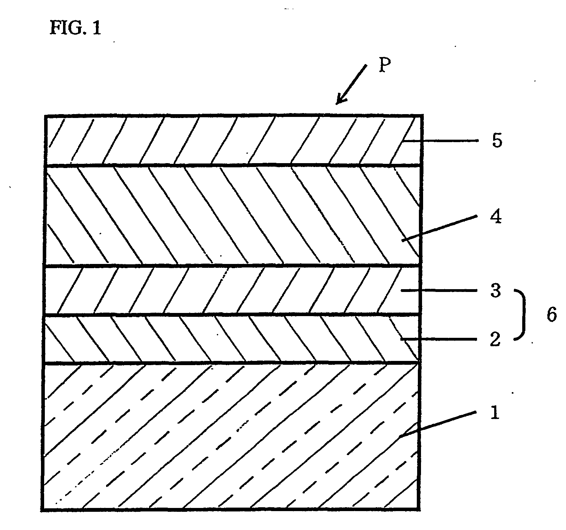

In Figure 1, a photocatalytic member P comprises a first primer layer 2, a second primer layer 3, a titanium-based oxide film 4 and a silicon oxide film 5 formed in turn on a transparent substrate 1, in which the first primer layer and the second primer layer constitute a primer film 6.

(1) Transparent substrate

In the present invention, although a transparent substrate 1 such as a transparent resin may be used, a glass substrate is preferred, for example, for use in a window glass for housing from a viewpoint of durability and impact resistance. As a glass substrate, a silicate glass plate, for example, a glass plate prepared by a floating process and the like may be applied. Further, when a window glass is used with the surface having the film facing the inside of a room, the glass substrate is preferably the one which transmits the light capable of exiting a titanium-based oxide film as a photocatalytic film, that is, ultraviolet light and/or visible light.

In the above-described silicate glass, alkaline components such as sodium, potassium and the like are often contained typically for the reason of insuring melting properties to cast into a plate form and the like. The primer film 6 which will be described below is interposed between the transparent substrate 1 (glass substrate) and the titanium-based oxide film 4, so that it is possible to prevent the reduction of the photocatalytic activity due to the diffusion of alkaline ions in the transparent substrate 1 into the titanium-based oxide film 4.

Incidentally, for obtaining the photocatalytic member P in which the color of reflected light and the color of transmitted light exhibit neutral, as described above, the chromaticness indices a* and b* in the L*a*b* color system as provided in JIS Z 8729-1980 are preferably in the range indicated as within ±5.

On the other hand, when the chromaticness indices a* and b* are in the range exceeding ±5, the color of reflected light and the color of transmitted light become to exhibit chromatic colors and the "intensity" of color becomes prominent. Therefore, in order to adjust the color of reflected light and the color of transmitted light to neutral, the chromaticness indices a* and b* are preferably in the range indicated as within ±5.

In addition, respective thicknesses of the primer film 6 and the titanium-based oxide film 4 are set so that the chromaticness indices a* and b* of the color of reflected light and the color of transmitted light are sufficiently within ±5; the irregular color by the interference is reduced; the transparency is ensured; and the performance as a photocatalytic membrane P is sufficient.

(2) Titanium-based oxide film

The titanium-based oxide film 4 is a film having a photocatalytic function, and if the thickness of the titanium-based oxide film 4 is too thin, it would not absorb the light sufficiently and could not obtain sufficient photocatalytic activity. It is possible to adjust the color of reflected light and the color of transmitted light by adjusting the thicknesses of the titanium-based oxide film 4 together with the primer film 6 which will be described below. When the thickness of the titanium-based oxide film 4 is too thick, the interference of light can be ignored and the necessity of adjusting color will be low. However, the approach to increase the thickness of the titanium-based oxide film 4 for neutralization will lead to a large cost increase. According to the present invention, the titanium-based oxide film 4 having a physical thickness in the range of 50 to 500 nm, more preferably from 100 to 300 nm, can develop the photocatalytic activity and achieve neutralization.

In the present invention, as for the titanium-based oxide film 4, a titanium oxide film, for example, is preferably applied. In addition, metals such as Fe, Co, Ni, Cu, Zn, V, Cr, Nb, Mo, Ta, W, Al, Si, Sn and the like and the oxides of the above-described metals can be doped into the titanium-based oxide film 4 to improve the photocatalytic activity in the range where the optical characteristics of the film is not extremely changed.

(3) Primer film

A primer film 6 is composed of two layers consisting of a first primer layer 2 and a second primer layer 3 laminated on the first primer layer 2, which mainly has the action to suppress the variation of the interference color due to the thickness variation of titanium-based oxide film 4 which is a photocatalytic film to reduce the occurrence of the irregular color by the interference. However, when the first primer layer 2 and the second primer layer 3 have a physical thickness below 20 nm, respectively, the film thickness is too thin to largely influence the interference of light to effectively reduce the occurrence of the irregular color by the interference. On the other hand, it has been found that when the first primer layer 2 and the second primer layer 3 have a physical thickness above 100 nm, respectively, it is also difficult to effectively reduce the occurrence of the irregular color by the interference. Consequently, in the present invention, the first primer layer 2 and the second primer layer 3 which constitute the primer film have film thicknesses which are set in the physical thickness range of 20 to 100 nm, more preferably from 30 to 80 nm, respectively.

In addition, the first primer layer 2 of the primer film 6 adjoining the transparent substrate 1 has a function to block the gas and impurities which are discharged or eluted from the transparent substrate 1 to reduce a photocatalytic function, which includes, for example, a silicon nitride, silicon oxide or silicon oxynitride. They all have good blocking properties, so that the ratio of oxide or nitride can be freely set. However, it is desirable to increase the ratio of nitride to bring a refractive index into the range of 1.6 to 2.2 in order to achieve neutralization by a thinner film thickness.

Further, the second primer layer 3 of the primer film 6 adjoining the titanium-based oxide film 4 preferably comprises a niobium-based oxide having properties to improve a photocatalytic function. The niobium-based oxide layer serves as a carrier barrier layer, which has the effect to transfer the carrier generated by the light irradiation to the surface of the photocatalytic member P.

Furthermore, the neutralization can be achieved by using tin-based oxide or zinc-based oxide, whose effect for improving the photocatalytic activity is not so large, but which has an equivalent refractive index to the niobium-based oxide and a higher sputter rate compared with the niobium-based, enabling to enhance production efficiency.

(4) Top surface layer

In the present invention, a silicon oxide film 5 having oxygen defects can be formed on the top surface of a laminate in which a titanium-based oxide film is formed. The above-described oxygen defects denote the state or the part where oxygen has come out of a part of a network of silicon-oxygen-silicon. The part where oxygen has come out combines with OH for electron charge compensation to form a silanol group, so that it has water retention effect, maintains hydrophilic nature and is capable of improving stain resistance. The above-described silicon oxide film 5 preferably has a thickness in the range of 5 to 25 nm. When the above-described silicon oxide film 5 has a thickness below 5 nm, the control of film thickness is difficult and the effect for improving stain resistance is not conspicuous, and when it has a thickness of 25 nm or more the carrier generated in the titanium oxide film 4 cannot diffuse to the surface of the photocatalytic member P to reduce the photocatalytic activity.

(5) Production method

In the present invention, as a method for forming a primer film 6, a titanium-based oxide film 4 and a silicon oxide film 5 on a transparent substrate 1, a vacuum deposition method, a CVD method or a coating method may be applied. However, a sputtering method is preferably employed in consideration of securing performance of a thin film and in-plane uniformity of a film thickness, the stability of production and the like. As the sputtering method, conventionally well-known methods can be applied such as a direct-current sputtering method, a high-frequency sputtering method, a PMS method (pulse magnetron sputtering method) for sputtering while eliminating electrical charges on a target surface by applying voltage to the cathodes disposed adjoining each other by alternately reversing the polarity of the applied voltage.

In addition, as a sputter deposition device for coating the surface of the transparent substrate 1 with the titanium-based oxide film 4, a well-known sputter deposition device can be used having a mechanism for introducing flow-rate controlled argon, oxygen and nitrogen into a deposition chamber, and at the same time having a function to evacuate the deposition chamber with a vacuum pump and to stably sustain the constant reduced pressure atmosphere.

Specific examples and comparative examples according to the present invention will now be described. For Examples 1 to 4 and Comparative Example 1 to 4, a glass plate was used for a transparent substrate; a titanium oxide film was used for a titanium-based oxide film; and a primer film, the titanium oxide film and a silicon oxide film were all covered using an in-line magnetron sputtering method.

[Example 1]

A soda lime silicate glass plate (100 mm $\times$ 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 230 nm; and the surface of the above-described titanium oxide film was covered with a silicon oxide film having a thickness of 10 nm. Film deposition conditions and measurement of optical characteristics of each film are shown below.

(Deposition conditions of silicon nitride film)

- ・  Target: conductive Si (B doped)
- ・  Applied power to target: 3 kW (RF)
- ・  $N_2$ flow rate: 100 sccm
- ・  Gas pressure: $4 \times 10^{-1}$ Pa
- ・  Covering film thickness: adjusted the number and the speed for passing the target and the applied power to the target; measured and confirmed using a stylus step profiler.

(Deposition conditions of niobium oxide film)

- ・  Target: Nb
- ・  Applied power to target: 3 kW (DC)

- O$_2$ flow rate: 100 sccm
- Gas pressure: 4 × 10$^{-1}$ Pa
- Covering film thickness: adjusted the number and the speed for passing the target and the applied power to the target; measured and confirmed using a stylus step profiler.

(Deposition conditions of titanium oxide film)

- Target: Ti
- O$_2$ flow rate: 100 sccm
- Gas pressure: 4 × 10$^{-1}$ Pa
- Applied power to target: 3 kW (DC)
- Covering film thickness: adjusted the number and the speed for passing the target and the applied power to the target; measured and confirmed using a stylus step profiler.

(Deposition conditions of silicon oxide film)

- Target: conductive Si (B doped)
- O$_2$ flow rate: 75 sccm
- Ar flow rate: 25 socm
- Gas pressure: 4 × 10$^{-1}$ Pa
- Applied power to target: 3 kW (RF)
- Covering film thickness: adjusted the number and the speed for passing the target and the applied power to the target; measured and confirmed using a stylus step profiler.

(Measurement of optical characteristics)

The film surface reflectance Rm (5°) and the transmittance T (0°) of the sample obtained in Example 1 were measured using a Perkin-Elmer λ20-type spectrophotometer in accordance with JIS R 3106-1985. As for the measurement of the color of reflected light and the color of transmitted light (a* and b*), the values in Table 1 were determined by the calculation from the chromaticness indices a* and b* in the L*a*b* color system provided in JIS Z 8729-1980.

The irregular color by the interference was determined according to the following procedure. The a* and b* of the color of reflected light and the color of transmitted light were measured for two points, that is, a center point assumed to have the thickest film thickness and a point in the vicinity of corners assumed to have the thinnest film thickness in the effective deposition area of a sample. The Δa* and Δb* which are the difference of a* values and b* values between the two points, respectively, were determined, and the color difference ΔE*$_{ab}$ according to the L*a*b* color system provided in JIS Z 8730-1980 was calculated from the equation below:

$$\Delta E^*_{ab} = (\Delta L^{*2} + \Delta a^{*2} + \Delta b^{*2})$$

in which the calculation was simplified by assuming ΔL*= 0 (no change of lightness). The color difference below 10 was evaluated as "good", from 10 to below 20 as "fair" and 20 or above as "poor".

As for the photocatalytic activity, the residual ratio (amount of decomposition) of triolein coated on a sample after the irradiation for 46 hours of the ultraviolet light having an intensity of 3 mW/cm$^2$ were measured, and the residual ratio below 30% was evaluated as "good", from 30% to below 70% as "fair" and 70% or above as "poor".

As for the stain resistant effect, a sample was irradiated for 30 minutes with the ultraviolet light having an intensity of 3 mW/cm$^2$, and then the sample was left in the dark for 30 minutes. Immediately after that, the contact angle was measured as an alternative characteristic, in which the contact angle below 5 degree was evaluated as "excellent", from 5 degree to below 10 degree as "good", from 10 degree to below 20 degree as "fair" and 20 degree or above as "poor".

As apparent from Table 1, the sample of Example 1 had neutral color of reflected light and neutral color of transmitted light, and no irregular color by the interference was observed. Both photocatalytic activity and stain resistant effect exhibited good results.

[Example 2]

A soda lime silicate glass plate (100 mm × 100 mm, 3 mm thick) was well cleaned; one of the surfaces of the glass plate was covered with a silicon oxynitride film having a thickness of 60 nm as a first primer layer; the surface of the above-described first primer layer was covered with a niobium oxide film having a thickness of 50 nm as a second primer layer; the surface of the above-described second primer layer was covered with a titanium oxide film having a thickness of 225 nm; and the surface of the above-described titanium oxide film was covered with a silicon oxide film having a thickness of 10 nm. Film deposition conditions were similar to Example 1. The deposition conditions of the silicon nitride film are shown below.

(Deposition conditions of silicon oxynitride film)

- · Target: conductive Si (B doped)
- · Applied power to target: 3 kW (RF)
- · $N_2$ flow rate: 90 sccm
- · $O_2$ flow rate: 10 sccm
- · Gas pressure: $4 \times 10^{-1}$ Pa
- · Covering film thickness: adjusted the number and the speed for passing the target and the applied power to the target; measured and confirmed using a stylus step profiler.

The obtained sample was evaluated in a similar manner to Example 1. According to the results, as shown in Table 1, the sample of Example 2 had neutral color of reflected light and neutral color of transmitted light, and no irregular color by the interference was observed. Both photocatalytic activity and stain resistant effect exhibited good results.

[Example 3]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a tin oxide film having a thickness of 20 nm as a second primer layer; the surface of the above-described second primer layer was covered with a titanium oxide film having a thickness of 150 nm; and the surface of the above-described titanium oxide film was covered with a silicon oxide film having a thickness of 10 nm. Film deposition conditions were similar to Example 1. The deposition conditions of the tin oxide film are shown below.

(Deposition conditions of tin oxide film)

- · Target: Sn
- · $O_2$ flow rate: 100 sccm
- · Gas pressure: $4 \times 10^{-1}$ Pa
- · Applied power to target: 3 kW (DC)
- · Covering film thickness: adjusted the number and the speed for passing the target and the applied power to the target; measured and confirmed using a stylus step profiler.

The obtained sample was evaluated in a similar manner to Example 1. According to the results, as shown in Table 1, the sample of Example 3 had neutral color of reflected light and neutral color of transmitted light, and no irregular color by the interference was observed. The photocatalytic activity was a little poor compared with Example 1 by having replaced the second primer layer with tin oxide, but the stain resistant effect exhibited good results.

[Example 4]

A soda lime silicate glass plate (100 mm × 100 mm, 3 mm thick) was well cleaned; one of the surfaces of the glass plate was covered with a silicon oxide film having a thickness of 20 nm as a first primer layer; the surface of the above-described first primer layer was covered with a niobium oxide film having a thickness of 50 nm as a second primer layer; the surface of the above-described second primer layer was covered with a titanium oxide film having a thickness of 235 nm; and the surface of the above-described titanium oxide film was covered with a silicon oxide film having a thickness of 10 nm. Film deposition conditions were similar to Example 1. The deposition conditions of the silicon oxide film for the first primer layer are shown below.

(Deposition conditions of silicon oxide film for first primer layer)

- Target: conductive Si (B doped)
- $O_2$ flow rate: 100 sccm
- Gas pressure: $4 \times 10^{-1}$ Pa
- Applied power to target: 3 kW (RF)
- Covering film thickness: adjusted the number and the speed for passing the target and the applied power to the target; measured and confirmed using a stylus step profiler.

The obtained sample was evaluated in a similar manner to Example 1. According to the results, as shown in Table 1, the sample of Example 4 had neutral color of reflected light, and some irregular color by the interference was observed. Both photocatalytic activity and stain resistant effect exhibited good results.

As indicated above, even when silicon oxide film (reflective index 1.46) is used for the first primer layer of the primer film, the chromatics indices a* and b* in Rm (5°) and T (0°) can satisfy within ±5 by adjusting the thickness of the niobium oxide film for the second primer layer. However, the amount of color change to the film thickness variation was a little poor compared with Examples 1 and 2, resulting in the occurrence of the irregular color by the interference.

[Example 5]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 75 nm; and the surface of the above-described titanium oxide film was covered with a silicon oxide film having a thickness of 10 nm. Film deposition conditions were similar to Example 1.

The obtained sample was evaluated in a similar manner to Example 1. According to the results, as shown in Table 1, the sample of Example 5 had neutral color, and no irregular color by the interference was observed. Both photocatalytic activity and stain resistant effect were close to tolerance limits due to a thin titanium oxide film.

[Example 6]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 455 nm; and the surface of the above-described titanium oxide film was covered with a silicon oxide film having a thickness of 10 nm. Film deposition conditions were similar to Example 1.

The obtained sample was evaluated in a similar manner to Example 1. According to the results, as shown in Table 1, the sample of Example 6 had neutral color, and no irregular color by the interference was observed. Both photocatalytic activity and stain resistant effect exhibited good results.

[Example 7]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; and the surface of the above-described second primer layer was covered with a titanium oxide film having a thickness of 230 nm. Film deposition conditions were similar to Example 1.

The obtained sample was evaluated in a similar manner to Example 1. According to the results, as shown in Table 1, the sample of Example 7 had neutral color, and no irregular color by the interference was observed. Since no top surface layer was disposed, good results were obtained for the photocatalytic activity, but the stain resistant effect exhibited a little poor results compared with Example 1 due to reduced capability for maintaining the hydrophilic nature.

[Example 8]

A soda lime silicate glass plate (100 mm $\times$ 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 230 nm; and the surface of the above-described titanium oxide film was covered with a silicon oxide film having a thickness of 20 nm. Film deposition conditions were similar to Example 1.
The obtained sample was evaluated in a similar manner to Example 1. According to the results, as shown in Table 1, the sample of Example 8 had neutral color, and no irregular color by the interference was observed. Both photocatalytic activity and stain resistant effect dropped since the thickness of the top surface layer increased compared with Example 1.

[Table 1]

Examples and Comparative Examples

| Examples | Structure | Physical film thickness [nm] | | | | Color of reflected light at film surface Rm (5°) | | Color of transmitted light T (0°) | | Irregular color by the interference | Photocatalytic activity | Stain resistant effect |
|---|---|---|---|---|---|---|---|---|---|---|---|---|
| | | First layer | Second layer | $TiO_2$ | $SiO_2$ | a* | b* | a* | b* | | | |
| 1 | $G/Si_3N_4/Nb_2O_5/TiO_2/SiO_2$ | 50 | 40 | 230 | 10 | 2.0 | -1.0 | -1.4 | 0.6 | good | good | excellent |
| 2 | $G/SiOxNy/Nb_2O_5/TiO_2/SiO_2$ | 60 | 50 | 225 | 10 | 0.1 | -1.7 | -0.6 | 1.1 | good | good | excellent |
| 3 | $G/Si_3N_4/SnO_2/TiO_2/SiO_2$ | 50 | 20 | 150 | 10 | -2.7 | -0.2 | -0.3 | -0.1 | good | fair | excellent |
| 4 | $G/SiO_2/Nb_2O_5/TiO_2/SiO_2$ | 20 | 50 | 235 | 10 | 0.7 | 3.4 | -2.4 | -0.8 | fair | good | excellent |
| 5 | $G/Si_3N_4/Nb_2O_5/TiO_2/SiO_2$ | 50 | 40 | 75 | 10 | -4.4 | -3.6 | 0.8 | 1.9 | good | fair | fair |
| 6 | $G/Si_3N_4/Nb_2O_5/TiO_2/SiO_2$ | 50 | 40 | 455 | 10 | -0.9 | -2.3 | -0.8 | 1.6 | good | good | excellent |
| 7 | $G/Si_3N_4/Nb_2O_5/TiO_2$ | 50 | 40 | 230 | - | 0.7 | -1.9 | -0.9 | 1.2 | good | good | good |
| 8 | $G/Si_3N_4/Nb_2O_5/TiO_2/SiO_2$ | 50 | 40 | 230 | 20 | 1.7 | 0.2 | -1.3 | 0.2 | good | fair | fair |

| Comparative Example | Structure | Physical film thickness [nm] | | | | Color of reflected light at film surface Rm (5°) | | Color of transmitted light T (0°) | | Irregular color by the interference | Photocatalytic activity | Stain resistant effect |
|---|---|---|---|---|---|---|---|---|---|---|---|---|
| | | First layer | Second layer | $TiO_2$ | $SiO_2$ | a* | b* | a* | b* | | | |
| 1 | $G/TiO_2/SiO_2$ | - | - | 185 | 10 | 14.9 | 12.4 | -8.2 | -7.1 | poor | poor | fair |
| 2 | $G/SiO_2/TiO_2/SiO_2$ | 20 | - | 185 | 10 | 14.6 | 12.3 | -10.1 | -2.4 | poor | fair | fair |
| 3 | $G/Si_3N_4/Nb_2O_5/TiO_2/SiO_2$ | 50 | 40 | 25 | 10 | 4.2 | 0.0 | -2.4 | 0.4 | good | poor | poor |
| 4 | $G/Si_3N_4/Nb_2O_5/TiO_2/SiO_2$ | 50 | 40 | 230 | 30 | 2.8 | 1.4 | -1.9 | -0.6 | good | poor | fair |

[Comparative Example 1]

A soda lime silicate glass plate (100 mm × 100 mm, 3 mm thick) was well cleaned; one of the surfaces of the glass plate was covered with a titanium oxide film having a thickness of 185 nm; and the surface of the above-described titanium oxide film was covered with a silicon oxide film having a thickness of 10 nm. Film deposition conditions were similar to Example 1.

The obtained sample was evaluated in a similar manner to Example 1. According to the results, as shown in Table 1, neutralization of the color of reflected light and the color of transmitted light was not achieved and the irregular color by the interference was observed, since the sample of Comparative Example 1 had no primer layer. The photocatalytic activity was not observed due to the absence of the alkaline passivation effect and carrier barrier effect, and the stain resistant effect exhibited relatively poor results.

[Comparative Example 2]

A soda lime silicate glass plate (100 mm × 100 mm, 3 mm thick) was well cleaned; one of the surfaces of the glass plate was covered with a silicon oxide film having a thickness of 20 nm as a primer layer; the surface of the above-described silicon oxide film was covered with a titanium oxide film having a thickness of 185 nm; and the surface of the above-described titanium oxide film was covered with a silicon oxide film having a thickness of 10 nm. Film deposition conditions were similar to Example 4.

The obtained sample was evaluated in a similar manner to Example 1. According to the results, as shown in Table 1, neutralization of the color of reflected light and the color of transmitted light was not achieved and the irregular color by the interference was observed, since the sample of Comparative Example 2 used silicon oxide for the first primer layer and had no second primer layer. The photocatalytic activity and the stain resistant effect exhibited a little poor results compared with Example 4 due to the absence of the carrier barrier effect.

[Comparative Example 3]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 25 nm; and the surface of the above-described titanium oxide film was covered with a silicon oxide film having a thickness of 10 nm. Film deposition conditions were similar to Example 1.

The obtained sample was evaluated in a similar manner to Example 1. According to the results, as shown in Table 1, the sample of Comparative Example 3 had neutral color, and no irregular color by the interference was observed. Both photocatalytic activity and stain resistant effect were poor even compared with Example 5 and almost ineffective due to the extremely thin titanium oxide film.

[Comparative Example 4]

A soda lime silicate glass plate (100 mm × 100 mm, 3 mm thick) was well cleaned; one of the surfaces of the glass plate was covered with a silicon nitride film having a thickness of 50 nm as a first primer layer; the surface of the above-described first primer layer was covered with a niobium oxide film having a thickness of 40 nm as a second primer layer; the surface of the above-described second primer layer was covered with a titanium oxide film having a thickness of 230 nm; and the surface of the above-described titanium oxide film was covered with a silicon oxide film having a thickness of 30 nm. Film deposition conditions were similar to Example 1.

The obtained sample was evaluated in a similar manner to Example 1. According to the results, as shown in Table 1, the sample of Comparative Example 4 had neutral color, and no irregular color by the interference was observed. Both photocatalytic activity and stain resistant effect dropped since the thickness of the top surface layer further increased compared with Example 8.

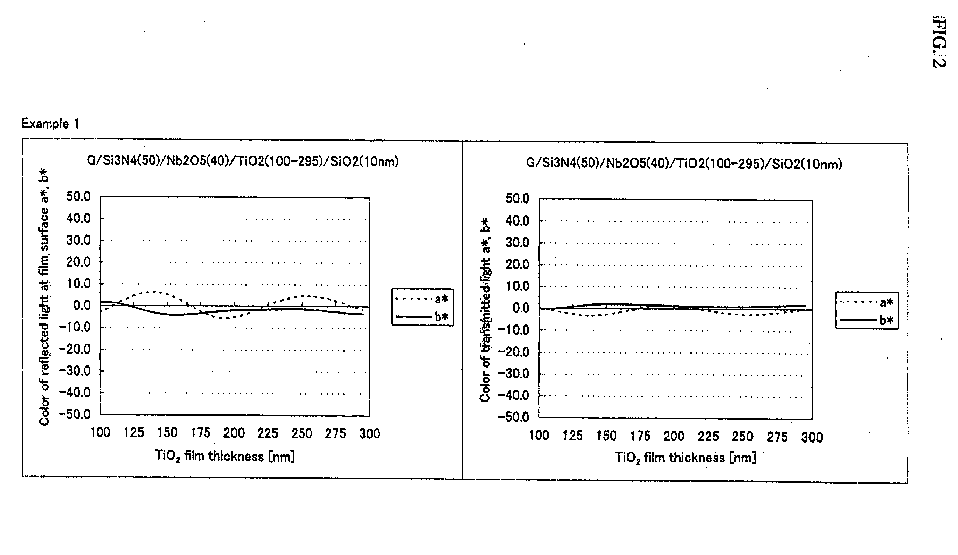

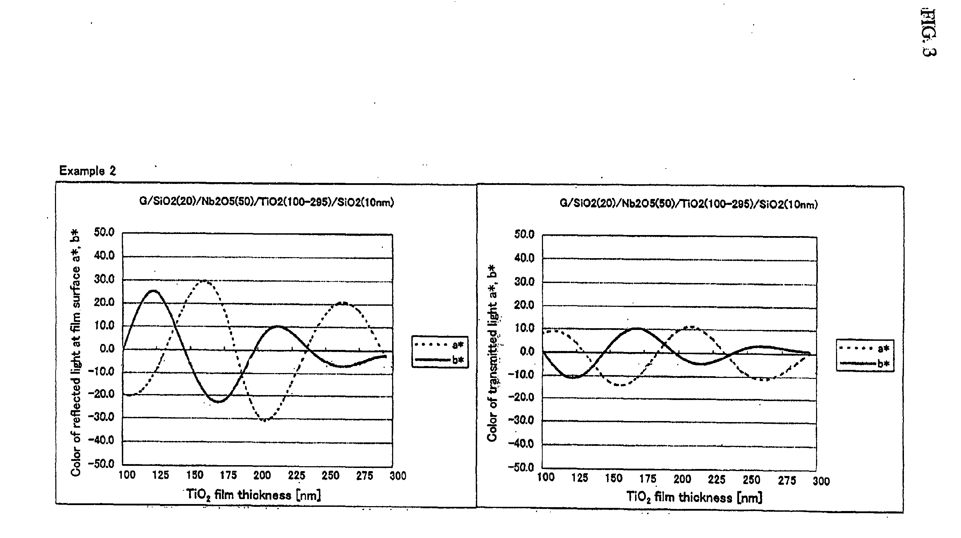

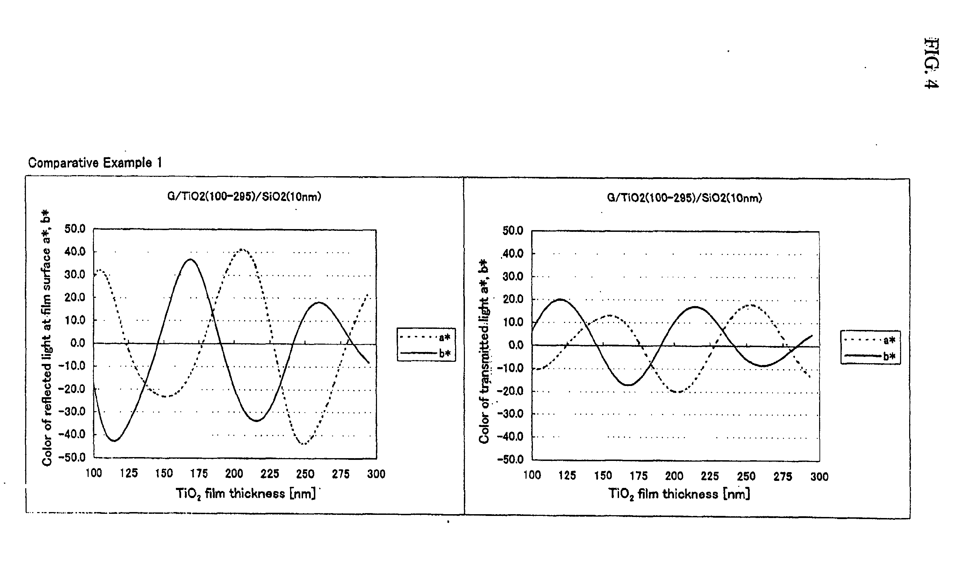

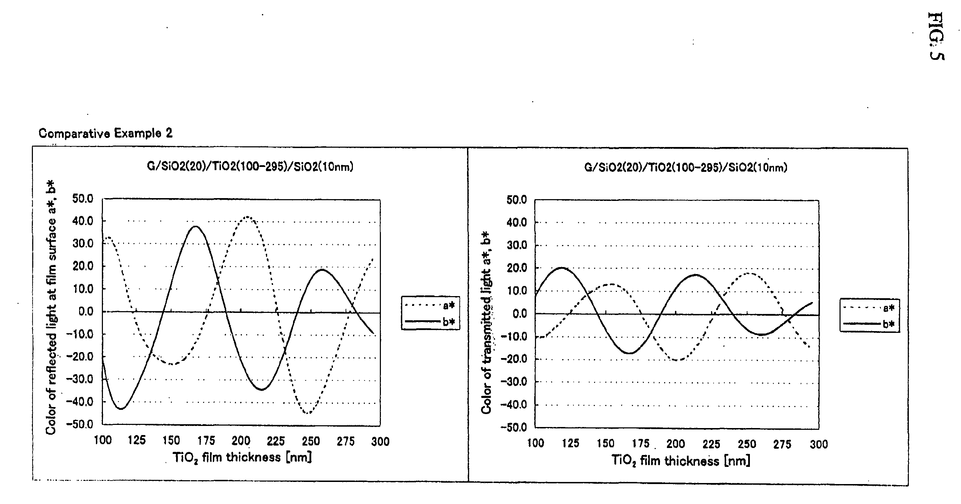

Figures 2 to 5 are graphical representations showing the simulation calculation results of the behavior of the color of reflected light at the film surface and the color of transmitted light (a* and b*) when a titanium oxide film has a thickness of 100 to 295 nm in the structure of Examples 1 and 2 and Comparative Examples 1 and 2. The simulation calculation results, to which the chromatic dispersion of optical characteristics corresponding to respective film materials have been added, have been confirmed to be in close agreement with experimental results.

In Examples 1 and 2, it is understood that the change of the colors of reflected and transmitted light is small when the titanium oxide film thickness varies and neutralization is possible for any film thickness. On the other hand, in Comparative Examples 1 and 2, the change of the colors is very large when the titanium oxide film thickness varies, and it is assumed that the irregular color by the interference due to the variation of the titanium oxide film thickness tends to occur easily.

Therefore, it is possible to provide a photocatalytic member capable of neutralizing the color of reflected light and the color of transmitted light and reducing the dependence of the color on the thickness of the titanium-based oxide film by setting the material (refractive index) and the film thickness of a primer layer within a certain range.

As described above, it is apparent that the photocatalytic member according to the present invention comprises a titanium-based oxide film disposed on one of the major surfaces of a transparent substrate, the titanium-based oxide film having a photocatalytic function and a physical thickness of 50 to 500 nm; and a primer film interposed between the above-described transparent substrate and the above-described titanium-based oxide film, the primer film being composed of two layers and having a total physical thickness of 40 nm or above, the layer of the above-described primer film adjoining the above-described transparent substrate having at least a function of blocking the gas and impurities which are discharged or eluted from the transparent substrate, and the layer of the above-described primer film adjoining the titanium-based oxide having a larger refractive index than that of the layer adjoining the above-described transparent substrate; in which the color of reflected light and the color of transmitted light exhibit neutral colors, and the irregular color by the interference due to the variation of the above-described titanium-based oxide film thickness is small.

Further, the photocatalytic member according to the present invention can maintain high photocatalytic activity and can maintain a stain resistant function based on hydrophilic nature for a long period of time.

Therefore, when the photocatalytic member according to the present invention is applied, for example, for an architectural window glass, the resultant window glass has neutral colors of reflected and transmitted light; exerts a stain resistant function when the laminated film is used for the outside of a room; exerts a stain resistant function when the laminated film is used for the inside of a room; and can serve as measures against the sick building syndrome.

Industrial Applicability

As described above, the photocatalytic member according to the invention has neutral color of reflected light and neutral color of transmitted light, and also exerts hydrophilic nature and a stain resistant function, so that its utility value as an architectural window glass and the like is high.

**Claims**

1. A photocatalytic member **characterized in that**:

   a titanium-based oxide film is disposed on one of the major surfaces of a transparent substrate, the titanium-based oxide film having a photocatalytic function and a physical thickness of 50 to 500 nm;
   a primer film is interposed between said transparent substrate and said titanium-based oxide film, the primer film being composed of two layers and having a total physical thickness of 40 to 200 nm, the layer of said primer film adjoining said transparent substrate having at least a function of blocking the gas and impurities which are discharged or eluted from the transparent substrate, and the layer of said primer film adjoining the titanium-based oxide having a larger refractive index than that of the layer adjoining said transparent substrate; and
   the primer film reduces the dependence of the color on the thickness of the titanium-based oxide film, and the color of reflected visible light and the color of transmitted visible light of one of the major surfaces of said transparent substrate, when observed at least in one direction, have chromaticness indices a* and b* in the L*a*b* color system in the range indicated as within ±5.

2. The photocatalytic member according to claim 1, **characterized in that** the layer of said primer film adjoining said transparent substrate has a physical thichness of 20 to 100 nm and comprises a silicon nitride, silicon oxide or silicon oxynitride having a refractive index at a wavelength of 550 nm of 1.4 to 2.2.

3. The photocatalytic member according to claim 1 or 2, **characterized in that** the layer of said primer film adjoining said titanium-based oxide film comprises a niobium-based oxide, tin-based oxide or zinc-based oxide having a physical thickness of 20 to 100 nm.

4. The photocatalytic member according to any one of claim 1 to 3, **characterized in that** a silicon oxide film having oxygen defects is disposed on a top surface.

**5.** The photocatalytic member according to any one of claim 1 to 4, **characterized in that** said primer film, said titanium-based oxide film and said silicon oxide film having oxygen defects comprise films formed by a sputtering method.

FIG. 1

FIG. 2

Example 1

G/Si3N4(50)/Nb2O5(40)/TiO2(100-295)/SiO2(10nm)

Color of transmitted light a*, b*

50.0  40.0  30.0  20.0  10.0  0.0  -10.0  -20.0  -30.0  -40.0  -50.0

100  125  150  175  200  225  250  275  300

TiO₂ film thickness [nm]

a*
b*

G/Si3N4(50)/Nb2O5(40)/TiO2(100-295)/SiO2(10nm)

Color of reflected light at film surface a*, b*

50.0  40.0  30.0  20.0  10.0  0.0  -10.0  -20.0  -30.0  -40.0  -50.0

100  125  150  175  200  225  250  275  300

TiO₂ film thickness [nm]

a*
b*

FIG. 3

FIG. 4

Comparative Example 1

FIG. 5

<div align="center">

**INTERNATIONAL SEARCH REPORT**

</div>

| | International application No. |
|---|---|
| | PCT/JP01/06044 |

| A. CLASSIFICATION OF SUBJECT MATTER |
|---|
| Int.Cl⁷ C03C17/34, B01J35/02 |

According to International Patent Classification (IPC) or to both national classification and IPC

| B. FIELDS SEARCHED |
|---|
| Minimum documentation searched (classification system followed by classification symbols) |
| Int.Cl⁷ C03C17/00-17/44, B01J35/02 |

Documentation searched other than minimum documentation to the extent that such documents are included in the fields searched
Jitsuyo Shinan Koho      1926-1996    Toroku Jitsuyo Shinan Koho 1994-2001
Kokai Jitsuyo Shinan Koho 1971-2001    Jitsuyo Shinan Toroku Koho 1996-2001

Electronic data base consulted during the international search (name of data base and, where practicable, search terms used)
JOIS
KW: photocatalyst KW: niobium oxide

| C. DOCUMENTS CONSIDERED TO BE RELEVANT | | |
|---|---|---|
| Category* | Citation of document, with indication, where appropriate, of the relevant passages | Relevant to claim No. |
| Y | JP 10-231146 A (Nippon Ita Glass Co., Ltd.),<br>02 September, 1998 (02.09.98),<br>Claims 8, 11, 13, 14, 17; Par. Nos. [0016], [0022], [0050];<br>working examples 1, 2, 10 to 12<br>& EP 882686 A1      & WO 98/27021 A1 | 1-5 |
| Y | JP 11-010006 A (Ebara Corporation),<br>19 January, 1999 (19.01.99),<br>Claim 4; Par. No. [0007]; working examples 1, 2<br>(Family: none) | 1-5 |
| Y | Yoshiyuki TAIKO et al., "Sanka Tianium Hikari Shokubai<br>Tanji Toumei Douden-sei Hakumaku no Tokusei, Dai 6 kai<br>Symposium, Hikari Shokubai Hannou no Saikin no Tenkai",<br>Hikari Kinou Zairyou Kenkyukai, 26 November, 1999<br>(26.11.99), pages 158 to 159 | 1-5 |
| Y | JP 10-202776 A (Central Glass Co., Ltd.),<br>04 August, 1998 (04.08.98),<br>Claim 3<br>(Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 September, 2001 (14.09.01) | 25 September, 2001 (25.09.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

**EP 1 300 374 A1**

## INTERNATIONAL SEARCH REPORT

International application No.

PCT/JP01/06044

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-143299 A (Nippon Sheet Glass Co., Ltd.), 23 May, 2000 (23.05.00), Claim 1; Par. Nos. [0020], [0027]    (Family: none) | 1-5 |
| Y | JP 2000-128581 A (Mitsubishi Heavy Industries, Ltd.), 09 May, 2000 (09.05.00), Claim 2; working example (Family: none) | 1-5 |
| Y | JP 2000-026139 A (Nippon Sheet Glass Co., Ltd.), 25 January, 2000 (25.0.00), Claims 1, 3; Par. No. [0002]    (Family: none) | 1-5 |
| A | K. TANNAKONE, J. BANDARA, "Multiphoton semiconductor photocatalysis Solar Energy Materials and Solar Cells", 01 February, 2000 (01.02.00), Vol.60, No.4, pages 361 to 365 | 3 |
| A | EP 842908 A1 (Nippon Sheet Glass Co., Ltd.), 20 May, 1998 (20.05.98), page 3, lines 24 to 29 & JP 10-194784 A, Par. No. [0016] & US 6001485 A | 4,5 |
| PX | JP 2001-121003 A (Nippon Sheet Glass Co., Ltd.), 08 May, 2001 (08.05.01), Claims 7, 8, 10, 11; Par. Nos. [0010], [0016] to [0017], [0020] to [0024] (Family: none) | 1-5 |
| PX | JP 2001-046881 A (Nippon Sheet Glass Co., Ltd.), 20 February, 2001 (20.02.01), Claims 2 to 8; Par. Nos. [0011] to [0020], [0027] to [0030]; working examples 5, 7; tables 5, 7 (Family: none) | 1-5 |

Form PCT/ISA/210 (continuation of second sheet) (July 1992)

20